# EUROPÄISCHE PATENTSCHRIFT

(11) **EP 3 371 063 B1**
(45) Veröffentlichungstag und Bekanntmachung des Hinweises auf die Patenterteilung: **13.08.2025**
(21) Anmeldenummer: 16794269.7
(22) Anmeldetag: 07.11.2016
(51) Int. Cl.: B65C 3/16, B65C 9/04, B65G 21/20

(54) **VORRICHTUNG UND VERFAHREN ZUM AUSLEITEN VON OBJEKTEN MIT NICHT-ROTATIONSSYMMETRISCHER STANDFLÄCHE**
DEVICE AND METHOD FOR DISCHARGING OBJECTS WITH A NON-ROTATIONALLY SYMMETRICAL STANDING SURFACE
DISPOSITIF ET PROCÉDÉ D'ÉVACUATION D'OBJETS DOTÉS D'UNE SURFACE D'APPUI NE PRÉSENTANT PAS DE SYMÉTRIE DE RÉVOLUTION

(30) Priorität: 06.11.2015 DE 102015014275
(43) Veröffentlichungstag der Anmeldung: 12.09.2018
(73) Patentinhaber: Heuft Systemtechnik GmbH, 56659 Burgbrohl (DE)
(72) Erfinder: HEUFT, Bernhard, 56659 Burgbrohl (DE); ZAPPAI, Wolfgang, 56659 Burgbrohl (DE)
(74) Vertreter: Abitz & Partner
(86) Internationale Anmeldenummer: PCT/EP2016/076787
(87) Internationale Veröffentlichungsnummer: WO 2017/077099

(56) Entgegenhaltungen:
- DE-A1- 2 052 951
- JP-A- 2003 072 941
- JP-U- S6 053 728
- US-A- 3 038 584
- US-A- 3 142 371
- US-A- 3 643 781
- US-A- 3 666 082
- US-A- 5 706 933
- US-A- 5 816 029
- US-A1- 2003 024 650
- US-B1- 6 328 151

## Beschreibung

Die vorliegende Anmeldung betrifft eine Vorrichtung zum Ausleiten von Objekten wie Behältern, Gebinden, Packstücken mit achsensymmetrischen Standflächen, die auf einer Transporteinrichtung befördert werden.

Solche Ausleitvorrichtungen werden z.B. zum Aussortieren von fehlerbehafteten Getränkeflaschen oder anderen leeren oder bereits gefüllten Lebensmittelbehältern oder Verpackungen eingesetzt. Die Transporteinrichtung kann dabei ein Transportband, Gliederkettenförderer oder dergleichen sein. Beim Ausleitvorgang werden die Objekte häufig von einer ersten Transporteinrichtung auf eine zweite parallel verlaufende Transporteinrichtung verschoben. Typische Ausleitvorrichtungen können selbst bei Flaschendurchsätzen von bis zu 90000 Flaschen pro Stunde betrieben werden. Bei solch hohen Geschwindigkeiten können jedoch bereits geringe Unregelmäßigkeiten zu einem Verkippen von Objekten führen und damit die Produktivität der Anlagen erheblich einschränken.

In herkömmlichen Ausleitvorrichtungen werden auszuleitende Objekte durch möglichst kleine Querimpulse auf benachbarte, parallel laufende Transporteure geschoben. Die Querimpulse werden dabei möglichst gering gehalten, um die Gefahr eines Umkippens der Objekte zu minimieren.

Um den benötigten Querimpuls möglichst gering zu halten, kann das Ausleitelement individuell gesteuert werden, so dass der Querimpuls je nach Beschaffenheit des auszuleitenden Objekts eingestellt werden kann. Hierzu können zum Beispiel Objektparameter, wie das Gewicht oder der Schwerpunkt der auszuleitenden Objekte bestimmt werden. Das Ausleitelement kann dann auf Basis dieser Parameter gezielt angesteuert werden.

Bei Objekten mit rotationssymmetrischer Standfläche, wie bei typischerweise verwendeten zylinderförmigen Glas- oder Mehrweg-PET-Getränkeflaschen, kann dadurch ein Verkippen der Objekte beim Ausleiten weitgehend vermieden werden.

Bei typischerweise verwendeten zylinderförmigen Einweg-PET Getränkeflaschen hat sich jedoch gezeigt, dass es trotz Optimierung der Ansteuerung der Ausleitvorrichtung auf die oben genannten Objektparameter der auszuleitenden Objekte relativ häufig zu einem Verkippen der auszuleitenden Objekte kommt. Dies ist insbesondere der Fall, wenn die Objekte von einer Transporteinrichtung auf eine andere Transporteinrichtung ausgeleitet werden sollen, und ist weiter insbesondere dann der Fall, wenn die Objekte bei der Ausleitung Höhendifferenzen überwinden müssen.

Aus der Druckschrift JP S60 53728 U ist eine Vorrichtung zum Transport und Ausrichten von Behältern bekannt. Die Behälter sind dabei im Wesentlichen rotationssymmetrisch ausgeführt und weisen eine Abflachung im Bodenbereich auf. Die Abflachung der Behälter wirkt mit einem Ausrichteelement der Vorrichtung zusammen, wodurch sich die Behälter in einer vorgegebenen Ausrichtung am Geländer anordnen. In dieser Ausrichtung werden die Behälter dann einem nachfolgenden Prozess insbesondere einer Etikettierung zugeführt. Insbesondere offenbart JP S60 53728 U eine Vorrichtung zum Ausrichten und Orientierung von Objekten mit jeweils einer achsensymmetrischen Standfläche, wobei die achsensymmetrische Standfläche die Form eines regulären Polygons mit drei-, fünf-, oder siebenzähliger Achsensymmetrie aufweist, umfassend eine Ausrichteeinrichtung, die dazu ausgestaltet ist, die Objekte in einer vorbestimmte Orientierung auszurichten, eine Transporteinrichtung, auf der die Objekte einreihig und voneinander beabstandet von der Ausrichteeinrichtung zu einer stromabwärts Einrichtung gefördert werden, und mindestens ein Geländer, das an einer Seite der Transporteinrichtung mindestens im Bereich der Ausrichteeinrichtung vorgesehen ist, wobei die Ausrichteeinrichtung so ausgeführt ist, dass die Objekte an das Geländer gedrückt werden und sich dabei so ausrichten, dass sich eine Symmetrieachse der Standfläche in der Transportebene senkrecht zu diesem Geländer erstreckt, und die Objekte dann in dieser Orientierung der Ausleiteinrichtung zugeführt werden.

Aufgabe der vorliegenden Erfindung ist es daher, das Ausleitverfahren weiter zu verbessern und die Gefahr eines Umkippens der auszuleitenden Objekte, insbesondere bei auszuleitenden Objekten mit nicht-rotationssymmetrischer Standfläche weiter zu verringern.

Gelöst wird diese Aufgabe bei der Vorrichtung der eingangs genannten Art durch die Merkmale von Anspruch 1 sowie durch ein Verfahren mit den Merkmalen von Anspruch 4.

Die Vorrichtung zum Ausleiten von Objekten mit jeweils einer achsensymmetrischen Standfläche, wobei die achsensymmetrische Standfläche die Form eines regulären Polygons mit drei-, fünf-, oder siebenzähliger Achsensymmetrie aufweist, umfasst eine Ausrichteeinrichtung und eine Ausleiteinrichtung, sowie eine Transporteinrichtung, auf der die Objekte einreihig und voneinander beabstandet von der Ausrichteeinrichtung zur Ausleiteinrichtung gefördert werden. Mindestens ein Geländer ist an einer Seite der Transporteinrichtung und zwar mindestens im Bereich der Ausrichteeinrichtung vorgesehen. Die Ausrichteeinrichtung ist so ausgeführt, dass die Objekte an das Geländer gedrückt werden, an dem Geländer dann abrollen und sich dabei so ausrichten, dass sich eine Symmetrieachse der Standfläche der Objekte in der Transportebene senkrecht zu diesem Geländer erstreckt. Die Objekte werden dann in dieser Ausrichtung der Ausleiteinrichtung zugeführt. Die Ausleiteinrichtung ist dabei so orientiert, dass eine der Ecken der Standfläche der Objekte in die Richtung zeigt, in welche die Objekte ausgeleitet werden.

In einer Ausführungsform besteht die Standfläche der Objekte aus einer geschlossenen Auflagefläche. Die geschlossene Auflagefläche kann dann zum Beispiel die Form eines regulären Polygons oder Sterns mit drei, fünf oder sieben Ecken aufweisen. In einer bevorzugten Ausführungsform besteht die Standfläche aus einzelnen, voneinander beabstandeten Auflageflächen. In diesem Fall ist die achsensymmetrische Standfläche dann als die gesamte Fläche zu verstehen, die von den einzelnen Auflageflächen gebildet wird, wobei die Auflageflächen dann jeweils an den Ecken eines regulären Drei-, Fünf- oder Siebenecks angeordnet sind. Vorzugsweise besitzen die auszuleitenden Objekte eine Standfläche in Form eines regulären Dreiecks, Fünfecks, oder Siebenecks. Bevorzugt besitzen die auszuleitenden Objekte eine Standfläche in Form eines regulären Fünfecks. Bevorzugt besteht die Standfläche in Form eines regulären Fünfecks aus fünf einzelnen Auflageflächen.

Objekte im Sinne der vorliegenden Erfindung können dabei Behälter wie Glasflaschen, Plastikflaschen, Container, Dosen, Gebinde oder andere Packstücke sein. Diese Begriffe werden in der vorliegenden Beschreibung weitgehend synonym verwendet. Mehrweg-Behälter haben typischerweise rotationssymmetrische Standflächen. Einweg-Behälter dagegen haben oftmals nicht-rotationssymmetrische Standflächen. Verbreitet werden insbesondere Einweg-PET-Behälter mit einer Standfläche, die aus fünf einzelnen Auflageflächen besteht, hergestellt. Diese sind dabei achsensymmetrisch an den Eckpunkten eines regelmäßigen Fünfecks angeordnet. Die vorliegende Erfindung eignet sich auch zur Anwendung beim Ausleiten von Objekten mit regelmäßigen dreieckigen oder siebeneckigen Standflächen.

Insbesondere Getränkebehälter haben oft unabhängig von der Geometrie ihrer Standfläche eine im Wesentlichen zylindersymmetrische Form. Mehrweg-Getränkebehälter weisen typischerweise über ihre ganze Höhe eine zylindersymmetrische Form auf. Sie besitzen einen zylindersymmetrischen Körper mit rotationssymmetrischer Standfläche. Einweg-Getränkebehälter weisen demgegenüber oftmals einen zylindersymmetrischen Körper mit einer nicht-rotationssymmetrischen Standfläche auf. Typischerweise geht dabei der Querschnitt des Behälters von einer achsensymmetrischen Standfläche innerhalb eines Bodenbereichs in einen im Wesentlichen rotationssymmetrischen Querschnitt über. Dieser Bodenbereich erstreckt sich meist über bis zu einigen Zentimetern und weist dabei eine Geometrie auf, die der Geometrie der Standfläche entspricht.

Das erfindungsgemäße seitliche Geländer ist so ausgeführt, dass es mit dem achsensymmetrischen Bodenbereich der Objekte zusammenwirkt. Wenn die Objekte weitere Abschnitte aufweisen, die einen Querschnitt aufweisen, der der Geometrie der Standfläche entspricht, so kann das Geländer auch mit einem dieser weiteren Abschnitte zusammenwirken. Allgemein wird in dieser Beschreibung der Umfangsabschnitt des Objekts der mit dem Geländer zum Zwecke der Ausrichtung der Objekte zusammenwirkt, als "achsensymmetrischer Umfangsabschnitt" bezeichnet.

Als "rotationssymmetrisch" wird eine Fläche oder ein Querschnitt in der vorliegenden Anmeldung dann bezeichnet, wenn eine Drehung um jeden beliebigen Winkel um einen Punkt die Fläche auf sich selbst abbildet.

Als "achsensymmetrisch" wird eine Fläche oder ein Querschnitt in der vorliegenden Anmeldung dann bezeichnet, wenn sie durch die Achsenspiegelung an ihrer Symmetrieachse auf sich selbst abgebildet wird. Eine Fläche oder ein Querschnitt kann auch mehrere Symmetrieachsen haben. Eine in der vorliegenden Anmeldung als "achsensymmetrisch" bezeichnete Fläche, kann auch eine Fläche sein, die durch eine Drehung um bestimmte Winkel um einen Punkt die Fläche auf sich selbst abbildet. Von dem Begriff "achsensymmetrisch" sollen in dieser Anmeldung aber explizit keine rotationssymmetrischen Flächen erfasst sein.

Beim Ausleiten von Objekten mit achsensymmetrischer aber eben nicht-rotationssymmetrischer Standfläche hat sich gezeigt, dass der Ausleiterfolg auch wesentlich von der Orientierung der Standfläche abhängt. Es hat sich dabei überraschenderweise gezeigt, dass es am seltensten zum Verkippen kommt, wenn die Objekte in einer solchen Orientierung ausgeleitet werden, bei der eine der Ecken der Standflächen genau in die Richtung zeigt, in die die Ausleitung erfolgen soll. In dieser Ausrichtung erfolgt die Ausleitung dann entlang einer Symmetrieachse der Standfläche.

Einreihig und voneinander beabstandet transportierte Objekte werden üblicherweise auf Transporteuren mit beidseitig vorgesehenen Geländern gefördert. Die Objekte gelangen abwechselnd mit einem der beiden Geländer in Kontakt. Durch Reibung mit dem Geländer werden die Objekte daher mal in und mal gegen den Uhrzeigersinn in Rotation versetzt, so dass sich ihre Orientierung fortlaufend ändert. Will man erreichen, dass die Objekte sich kontrolliert drehen, muss dafür gesorgt werden, dass die Objekte nur an einem Geländer abrollen.

Gemäß einer nicht erfindungsgemäßen Ausführungsform der Erfindung ist das Geländer an dem die Objekte im Bereich der Ausrichteinrichtung abrollen sollen unter einem spitzen Winkel gegenüber der ursprünglichen Transportrichtung der Transporteinrichtung angeordnet. Die von der Transporteinrichtung angeförderten Objekte werden aufgrund der Haftreibung zwischen ihrer Standfläche und der Transporteinrichtung leicht an das schräg angeordnete Geländer gedrückt und rollen an diesem ab. Je größer der Winkel ist unter dem das Geländer angeordnet ist, desto größer ist die Andruckkraft, mit der die Objekte gegen das Geländer gedrückt werden. Grundsätzlich ist der Winkel dabei beliebig wählbar und kann entsprechend der Transportaufgabe angepasst werden. Als besonders vorteilhaft hat sich jedoch erwiesen, dass bereits Winkel von unter 5° und weiter bevorzugt Winkel zwischen 1° und 3° ausreichend sind, um die nötige Andruckkraft aufzubringen. Unter dieser Neigung können ausreichend lange Ausrichteeinrichtungen vorgesehen werden, ohne dass die Breite der Transporteinrichtung erhöht werden muss.

Diese Ausführungsform ist technisch besonders einfach zu erreichen, da keine zusätzlichen Komponenten und auch keine Änderungen an anderen Komponenten benötigt werden.

Das Andrücken der Objekte an das Geländer kann aber auch auf anderem Wege erreicht werden. Zum Beispiel kann das Geländer parallel zur Transporteinrichtung angeordnet sein, aber die Transporteinrichtung kann leicht gekippt werden, so dass die Behälter aufgrund der Hangabtriebskraft gegen das Geländer gedrückt werden.

In einer weiteren nicht erfindungsgemäßen Ausführungsform kann eine Andrückeinrichtung vorgesehen sein, die die Objekte sanft an das Geländer andrückt. Eine solche Andrückeinrichtung kann zum Beispiel eine Bürsteneinrichtung sein, die auf der dem Geländer gegenüberliegenden Seite angebracht ist und die einzelnen Objekte mit den Borsten sanft an das Geländer andrückt. Die Einrichtung muss dabei so gewählt sein, dass ein Abrollen der Objekte an dem Geländer noch möglich ist.

Für die Funktion der Ausrichteeinrichtung ist das Vorsehen eines Geländers auf einer Seite der Transporteinrichtung ausreichend. Um aber die Betriebssicherheit zu erhöhen, kann auch auf der anderen Seite der Transporteinrichtung ein Geländer vorgesehen sein.

Die Länge der Ausrichtevorrichtung ist vorzugsweise an die Transportaufgabe anpassbar. Da die Objekte sich üblicherweise nur um einen Teil des Umfangs drehen müssen, ist es in vielen Fällen ausreichend, wenn die Länge der Ausrichteeinrichtung in etwa dem Objektumfang entspricht.

Das Geländer kann grundsätzlich jede beliebige Form haben solange es so geformt ist, dass es mit demjenigen Objektabschnitt zusammenwirkt, der einen Querschnitt hat, der der Geometrie der Standfläche des Objekts entspricht. Vorzugsweise ist das Geländer schienenförmig ausgeführt und ist auf Höhe des achsensymmetrischen Umfangabschnitts der zu transportierenden Objekte angebracht. Die vertikale Erstreckung des Bodenbereichs kann von Objekttyp zu Objekttyp variieren, so dass das Geländer vorzugsweise einstellbar ausgeführt ist, und sowohl vertikal als auch horizontal verfahrbar ist, damit es an die Geometrie der zu transportierenden Objekte angepasst werden kann.

Weiter vorzugsweise ist das Geländer aus mehreren Elementen, zum Beispiel mindestens zwei Schienen, aufgebaut. Eine erste Schiene, auch Ausrichteschiene genannt, ist dabei auf Höhe des achsensymmetrischen Umfangsabschnitts der Objekte angeordnet. Da der achsensymmetrische Umfangsabschnitt der Objekte üblicherweise der Bodenabschnitt der Objekte ist, ist die Ausrichteschiene meist nur wenige Millimeter über der Transporteinrichtung angeordnet. Bei derart niedrigen Geländerschienen besteht immer die Gefahr, dass die Objekte über die Schiene aus der Transporteinrichtung heraus kippen. Um ein solches Herausfallen der Objekte zu vermeiden, ist es vorteilhaft noch eine weitere Geländerschiene, auch Leitschiene genannt, vorzusehen. Die Leitschiene ist vorzugsweise auf Höhe eines rotationssymmetrischen Umfangsabschnitts der Objekte vorzusehen. Bei typischerweise zu transportierenden Objekten wird die Leitschiene etwa auf Höhe der Objektmitte angebracht.

Die Leitschiene ist vorzugsweise parallel zur Ausrichteschiene angeordnet. Vorzugsweise ist die Leitschiene gegenüber der Ausrichteschiene seitlich versetzt angeordnet. Der seitliche Versatz der Leitschiene hängt dabei vom Umfang der Objekte ab. Vorzugsweise ist der seitliche Versatz so zu wählen, dass die Objekte mit der Leitschiene erst dann in Kontakt kommen, wenn sich die Objekte in der gewünschten Ausleitorientierung befinden. Es können auch mehrere Leitschienen eingesetzt werden.

Es ist selbstverständlich auch möglich auf der zweiten Seite der Transporteinrichtung ebenfalls ein konventionelles Geländer vorzusehen, um ein Umkippen der Objekte auf dieser Seite der Transporteinrichtung zu vermeiden.

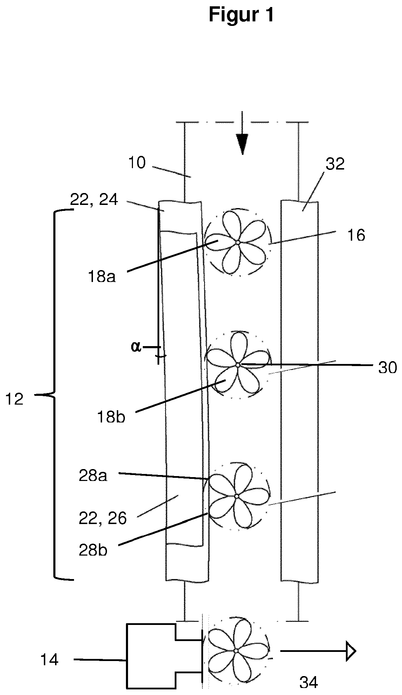

Die Objekte richten sich in der Ausrichteeinrichtung selbstständig aus, wie im Folgenden beschrieben wird. Die Objekte werden wie in Fig. 1 dargestellt von einer Transporteinrichtung der Ausrichteeinrichtung zugeführt. Die Objekte kommen im Bereich der Ausrichteeinrichtung mit der schräg zur ursprünglichen Transportrichtung angeordneten Ausrichteschiene in Kontakt. Im Allgemeinen werden die Objekte dabei eine solche Orientierung aufweisen, dass es einen Kontaktpunkt zwischen dem Objekt und der Ausrichteschiene gibt. An diesem Kontaktpunkt rollt das Objekt an der Ausrichteschiene ab bis ein zweiter Kontaktpunkt mit der Ausrichteschiene in Berührung kommt, wie dies in Fig. 1 angedeutet ist. Bei typischerweise verwendeten Objekten entspricht diese Position bereits der gewünschten Ausleitorientierung. In dieser Orientierung verläuft eine Symmetrieachse der Standfläche senkrecht zur Ausrichteschiene. Außerdem ist der Abstand des Objektmittelpunkts von der Ausrichteschiene in dieser Orientierung am geringsten, so dass nur in dieser Position die Leitschiene mit dem Objekt in Berührung kommen kann. Sobald das Objekt diese Orientierung eingenommen hat, wird eine weitere Drehung des Objekts verhindert. Eine weitere Drehung des Objekts würde nämlich bedeuten, dass der Objektmittelpunkt sich wieder von der Ausrichtschiene wegbewegen müsste. Dem wirkt aber der Anpressdruck entgegen, mit dem das jeweilige Objekt an die Ausrichtschiene gedrückt wird. Das Objekt verharrt daher in dieser Orientierung und wird in dieser Orientierung zur Ausleiteinrichtung geführt.

Die Ausleiteinrichtung kann eine beliebige dem Fachmann bekannte Ausleiteinrichtung sein. Typischerweise werden hierfür Ausstoßer oder Pusher verwendet, die senkrecht zur Transporteinrichtung angeordnet sind, und einem auszuleitenden Objekt einen Querimpuls verleihen. Durch den Querimpuls wird das auszuleitende Objekt von der Transporteinrichtung z.B. auf eine zweite parallel verlaufende Transporteinrichtung geschoben. Insbesondere wenn zwischen den Transporteinrichtungen geringfügige Höhenunterscheide auftreten, steigt die Gefahr, dass die Objekte bei der Ausleitung kippen. Statt eines Pushers können auch andere Ausleiteinrichtungen wie sie in den Patenten EP 0 003 111 B1, EP 0 019 117 B1 oder EP 1 438 245 B1 beschrieben sind, verwendet werden.

Die vorliegende Erfindung betrifft auch ein Verfahren zum Ausleiten von Objekten mit jeweils einer achsensymmetrischen Standfläche, wobei die achsensymmetrische Standfläche die Form eines regulären Polygons mit drei-, fünf, oder siebenzähliger Achsensymmetrie aufweist. Das Verfahren umfasst das Fördern der Objekte auf einer Transporteinrichtung, das Ausrichten der aus der Transporteinrichtung geförderten Objekte mittels einer Ausrichteeinrichtung und das Ausleiten der ausgerichteten Objekte mittels einer Ausleiteinrichtung. Die Objekte werden dabei auf der Transporteinrichtung einreihig und voneinander beabstandet von der Ausrichteeinrichtung zur Ausleiteinrichtung transportiert. Die Transporteinrichtung weist mindestens im Bereich der Ausrichteeinrichtung ein seitliches Geländer auf, wobei die Ausrichteeinrichtung so ausgeführt ist, dass die Objekte an das seitliche Geländer gedrückt werden und sich dabei so ausrichten, dass sich eine Symmetrieachse der achsensymmetrischen Standfläche der Objekte in der Transportebene senkrecht zu dem seitlichen Geländer erstreckt. Die Ausleiteinrichtung ist dabei so orientiert, dass eine der Ecken der Standfläche der Objekte in die Richtung zeigt, in welche die Objekte ausgeleitet werden.

Die Ausleiteinrichtung ist vorzugsweise ein Pusher, der auf derselben Seite angeordnete ist wie das seitliche Geländer und der die ausgerichteten Objekte senkrecht zur Transportrichtung von der dem Pusher gegenüberliegenden Seite von der Transporteinrichtung herunterschiebt. Die Objekte können dabei z.B. auf eine andere Transporteinrichtung oder in einen Sammelbereich verschoben werden.

Merkmale, die im Zusammenhang mit einzelnen Ausführungsformen beschrieben sind, können, soweit nichts anderes angegeben ist, auch im Zusammenhang mit anderen Ausführungen eingesetzt werden.

Ausführungsbeispiele der Erfindung werden nachfolgend anhand der Zeichnung erläutert. Es zeigen:
Fig. 1 eine Aufsicht einer erfindungsgemäßen Ausleitvorrichtung;
Fig. 2 Seitenansicht in Transportrichtung auf die in Fig. 1 am Anfang der Ausrichteeinrichtung abgebildeten Flasche;
Fig. 3 Seitenansicht in Transportrichtung auf die in Fig. 1 am Ende der Ausrichteeinrichtung abgebildeten Flasche;

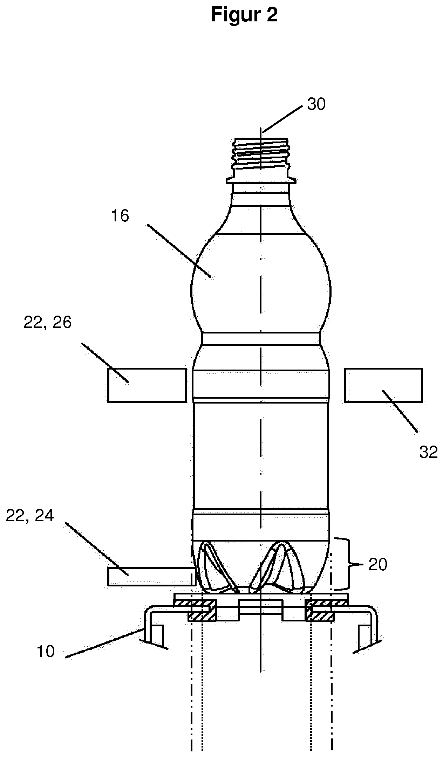

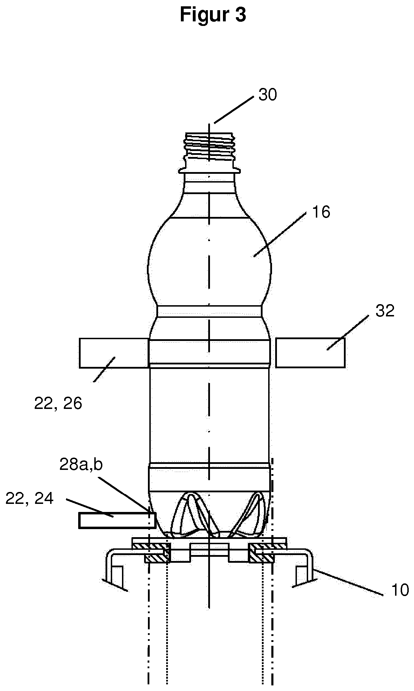

Fig. 1 zeigt eine Ausführungsform der erfindungsgemäßen Ausleitvorrichtung umfassend eine Transporteinrichtung 10, eine Ausrichteeinrichtung 12 und eine Ausleiteinrichtung 14. Auf der Transporteinrichtung werden Objekte 16 transportiert. Wie durch die gestrichelten Kreise angedeutet, sind die Objekte 16 im Wesentlichen zylinderförmig und damit rotationssymmetrisch. Die Standfläche 18 der Objekte 16 ist dagegen nicht rotationssymmetrisch, sondern achsensymmetrisch mit fünfzähliger Symmetrieachse. Dies ist durch die keulen-förmigen Strukturen mit durchgezogenen Linien angedeutet. Die Objekte 16 können zum Beispiel typischerweise verwendete Einweg-PET-Flaschen sein, deren Standfläche 18 von fünf symmetrisch angeordneten Auflageflächen 18a,b,c,d,e gebildet wird. Die einzelnen Auflageflächen 18a,b,c,d,e, sind dabei in Form eines regelmäßigen Fünfecks ausgerichtet. Wie auch aus den Querschnitten der Figuren 2 und 3 zu erkennen ist, erstrecken sich die einzelnen Auflageflächen 18a,b,c,d,e üblicherweise nicht bis zum äußeren Umfang der Flaschen 16, sondern sind etwas zum Flaschenmittelpunkt versetzt angeordnet. Die fünfeckige Anordnung der Standfläche 18 setzt sich auch noch innerhalb eines Bodenbereiches 20 der Flasche 16 fort, wobei der Flaschenquerschnitt innerhalb dieses Bodenbereiches 20 sukzessive von der achsensymmetrischen fünfeckigen Form der Standfläche 18 in einen rotationssymmetrischen kreisförmigen Flaschenquerschnitt übergeht.

Es wurde überraschenderweise festgestellt, dass bei Flaschen 16 mit nicht-rotationssymmetrischer Standfläche 18 der Erfolg des Ausleitvorgangs wesentlich von der Orientierung der Standfläche 18 der Flaschen 16 während des Ausleitvorgangs abhängt. Bei typischerweise verwendeten Einweg-PET-Flaschen 16 mit Standflächen 18 mit fünfzähliger Achsensymmetrie, wie in Fig. 1 dargestellt, kann ein Verkippen der Flaschen 16 während des Ausleitvorgangs dann am wahrscheinlichsten vermieden werden, wenn die Standfläche 18 so ausgerichtet ist, dass eine der fünf Auflageflächen 18a,b,c,d,e beim Ausleitvorgang in die Richtung zeigt, in die die Flasche 16 ausgeleitet werden soll. Die Flasche 16, die in Fig.1 im Bereich der Ausleiteinrichtung dargestellt ist, befindet sich bereits in der optimalen Orientierung für die Ausleitung. In dieser Ausrichtung erstreckt sich eine der Symmetrieachsen der Standfläche 18 der Flasche 16 senkrecht zu dem im Bereich der Ausrichteeinrichtung 12 vorgesehenen Geländer 22.

Um die Flaschen 16 in der gewünschten Orientierung der Ausleiteinrichtung 14 zuzuführen, kann eine Ausrichteeinrichtung 12, wie sie in Fig. 1 dargestellt ist, verwendet werden. Die Ausrichteeinrichtung 12 besteht dabei im Wesentlichen aus einem zweiteiligen schienenförmigen Geländer 22, welches unter einem spitzen Winkel α von etwa 1-2° bezüglich der Transporteinrichtung 10 am in Förderrichtung rechten Rand der Transporteinrichtung 10 angeordnet ist. Durch die Reibung zwischen der Transporteinrichtung 10 und der Standfläche 18 der Flaschen 16 wird jede Flasche 16 sanft an das schräg zur Transporteinrichtung 10 angeordnete Geländer 22 gedrückt.

Das zweiteilige Geländer 22 umfasst eine erste Geländerschiene, die Ausrichteschiene 24, die in Höhe des achsensymmetrischen Bodenbereichs 20 der Flaschen 16 angeordnet ist. Um ein Kippen der Flaschen 16 zu vermeiden, ist darüber hinaus eine zweite Geländerschiene, die Leitschiene 26, vorgesehen. Die Leitschiene 26 befindet sich etwa auf Höhe der Mitte der Flaschen 16 in einem Bereich, in dem die Flaschen 16 einen rotationssymmetrischen Querschnitt aufweisen. Die Leitschiene 26 ist zudem etwas zur Außenseite der Transporteinrichtung 10 versetzt angeordnet, so dass in der Ausrichtung in Fig. 2 nur der Bodenbereich 20 mit der Ausrichteschiene 24 des Geländers 22 in Kontakt kommt. Wie in Fig. 1 dargestellt rollt die Flasche 16 anschließend an der Ausrichteschiene 24 über den Kontaktpunkt 28a zwischen der ersten Auflagefläche 18a und der Ausrichteschiene 24 ab, bis der zweite Auflagebereich 18b ebenfalls mit der Ausrichteschiene 24 in Kontakt kommt. Eine Weiterdrehung der Flasche 16 könnte dann nur noch über den zweiten Kontaktpunkt 28b zwischen der Ausrichteschiene 24 und dem zweiten Auflagebereich 18b erfolgen. Eine solche (Weiter-)Drehung wird aber durch den kontinuierlichen Reibungsdruck der Transporteinrichtung 10, durch den jede Flasche 16 an das Geländer 22 gedrückt wird, unterbunden.

Aufgrund der nicht-rotationssymmetrischen Form des Bodenbereichs 20 der einzelnen Flaschen 16 hängt der Abstand der Rotationsachse 30 der Flaschen 16 von der Leitschiene 26 von der Orientierung der Flaschen 16 ab. Am größten ist der Abstand zwischen der Rotationsachse 30 der Flaschen 16 und der Leitschiene 26 in der in Fig.1 am oberen Bildrand gezeigten Ausrichtung der Flasche 16. Mit zunehmender Drehung der Flasche 16 verringert sich dieser Abstand. Am kleinsten ist der Abstand zwischen der Rotationsachse 30 der Flaschen 16 und der Leitschiene 26, wenn der Bodenbereich 20 der Flasche 16 mit beiden Kontaktpunkten 28a und 28b an der Ausrichteschiene 24 anliegt, also wenn sich die Flasche in der gewünschten Ausleitorientierung befindet. Der seitliche Abstand der Leitschiene 26 wird daher vorzugsweise so eingestellt, dass die Flasche 16 in der gewünschten Ausleitorientierung gerade die Leitschiene 26 berührt. Dadurch wird ein Verkippen der Flaschen 16 während des Ausrichtungsvorgangs effektiv verhindert.

Auf der der Ausrichteeinrichtung gegenüberliegenden Seite der Transporteinrichtung ist ebenfalls ein Geländer 32 vorgesehen. Dieses Geländer dient nicht der Ausrichtung der Flaschen, sondern soll nur verhindern, dass Flaschen auf dieser Seite von der Transporteinrichtung kippen.

Da insbesondere Einweg-PET-Flaschen eine Vielzahl unterschiedlicher Formen aufweisen können, ist es sinnvoll, die einzelnen Geländerschienen 24, 26, 32 verschiebbar auszuführen, so dass deren Position an die jeweils anstehende Transportaufgabe angepasst werden kann.

Das Geländer 22 der Ausrichteeinrichtung 12 erstreckt sich bis zur Ausleiteinrichtung 14. Eine auszuleitende Flasche 16 wird der Ausleiteinrichtung 14 in der gewünschten Ausleitorientierung zugeführt. In der in Fig. 1 dargestellten Ausführungsform ist die Ausleiteinrichtung ein konventioneller Pusher, der der auszuleitenden Flasche 16 einen Querimpuls erteilt, so dass die Flasche von der Transporteinrichtung 10 seitlich heruntergeschoben wird. Die Ausleiteinrichtung 14 ist mit einer Steuereinrichtung verbunden und kann dabei entsprechend vorher bestimmten Objektparametern individuell angesteuert werden. Die auszuleitenden Objekte können zum Beispiel auf eine zweite Transporteinrichtung (nicht dargestellt) geschoben werden. Da die Ausrichtung der auszuleitenden Flasche 16, wie in Fig.1 dargestellt, derart ist, dass eine der Auflageflächen 18a,b,c,d,e der Standfläche der Flasche in die Ausleitrichtung 34 zeigt, steht die Flasche 16 beim Ausleitvorgang so stabil wie möglich und die Gefahr eines Verkippens der Flasche 16 ist reduziert.

Selbstverständlich kann das beschriebene Prinzip der Ausrichtung der auszuleitenden Flaschen 16 auch bei Flaschen 16 mit Standflächen 18, die eine andere als eine fünfzählige Achsensymmetrie aufweisen, angewandt werden.

### Liste der Bezugszeichen

- 10: Transporteinrichtung
- 12: Ausrichteeinrichtung
- 14: Ausleiteinrichtung
- 16: Flasche
- 18: Standfläche
- 18a,b,c,d,e,: Auflagefläche
- 20: Bodenbereich der Flasche
- 22: Geländer
- 24: Ausrichteschiene
- 26: Leitschiene
- 28a,b: Kontaktpunkte
- 30: Rotationsachse der Flasche
- 32: Leitschiene
- 34: Ausleitrichtung

## Patentansprüche

1. Vorrichtung zum Ausleiten von Objekten (16) mit jeweils einer achsensymmetrischen Standfläche (18), wobei die achsensymmetrische Standfläche die Form eines regulären Polygons mit drei-, fünf-, oder siebenzähliger Achsensymmetrie aufweist, umfassend
eine Ausrichteeinrichtung (12), die dazu ausgestaltet ist, die Objekte in eine vorbestimmte Orientierung auszurichten,
eine Ausleiteinrichtung (14),
eine Transporteinrichtung (10), auf der die Objekte (16) einreihig und voneinander beabstandet von der Ausrichteeinrichtung (12) zur Ausleiteinrichtung (14) gefördert werden, und
mindestens ein Geländer (22), das an einer Seite der Transporteinrichtung (10) mindestens im Bereich der Ausrichteeinrichtung (12) vorgesehen ist,
wobei die Ausrichteeinrichtung (12) so ausgeführt ist, dass die Objekte (16) an das Geländer (22) gedrückt werden und sich dabei so ausrichten, dass sich eine Symmetrieachse der Standfläche (18) in der Transportebene senkrecht zu diesem Geländer (22) erstreckt, und die Objekte (16) dann in dieser Orientierung der Ausleiteinrichtung (14) zugeführt werden,
und wobei die Ausleiteinrichtung (14) so orientiert ist, dass eine der Ecken der Standfläche der Objekte (16) in die Richtung zeigt, in welche die Objekte ausgeleitet werden,
wobei die Objekte (16) durch Verkippung der Transporteinrichtung (10) im Bereich der Ausrichteeinrichtung (12) an das Geländer (22) gedrückt werden.

2. Vorrichtung gemäß Anspruch 1, wobei das Geländer (22) schienenförmig ausgebildet ist.

3. Vorrichtung gemäß einem der vorherigen Ansprüche, wobei das schienenförmige Geländer (22) mindestens eine Ausrichteschiene (24) und mindestens eine Leitschiene (26) umfasst, und
wobei die Ausrichteschiene (24) und die Leitschiene (26) parallel zueinander, aber bezüglich der Transportrichtung (10) seitlich versetzt angeordnet sind, so dass die Objekte (16) erst dann an der Leitschiene (26) geführt werden, wenn die Objekte (16) die gewünschte Ausrichtung angenommen haben.

4. Verfahren zum Ausleiten von Objekten mit einer achsensymmetrischen Standfläche, wobei die achsensymmetrische Standfläche die Form eines regulären Polygons mit drei-, fünf-, oder siebenzähliger Achsensymmetrie aufweist, umfassend die folgenden Schritte:
Fördern der Objekte (16) auf einer Transporteinrichtung (10),
Ausrichten der auf der Transporteinrichtung (10) geförderten Objekte (16) mittels einer Ausrichteeinrichtung (12) in eine vorbestimmte Orientierung, und
Ausleiten der in der vorbestimmten Orientierung ausgerichteten Objekte (16) mittels einer Ausleiteinrichtung (14),
wobei die Objekte (16) auf der Transporteinrichtung (10) einreihig und voneinander beabstandet von der Ausrichteeinrichtung (12) zur Ausleiteinrichtung (14) transportiert werden, und wobei die Transporteinrichtung (10) mindestens im Bereich der Ausrichteeinrichtung (12) mit einem seitlichen Geländer (22) versehen ist,
wobei die Ausrichteeinrichtung (12) so ausgeführt ist, dass die Objekte (16) an das seitliche Geländer (22) gedrückt werden und sich dabei so orientieren, dass sich eine Symmetrieachse der achsensymmetrischen Standfläche (18) der Objekte (16) in der Transportebene senkrecht zu dem seitlichen Geländer (22) erstreckt
und wobei die Ausleiteinrichtung (14) so orientiert ist, dass eine der Ecken der Standfläche der Objekte (16) in die Richtung zeigt, in welche die Objekte ausgeleitet werden,
wobei die Objekte (16) durch Verkippung der Transporteinrichtung (10) im Bereich der Ausrichteeinrichtung (12) an das Geländer (22) gedrückt werden.

5. Verfahren gemäß Anspruch 4, wobei die Ausleiteinrichtung (14) vorzugsweise ein Pusher ist, der auf derselben Seite angeordnet ist wie das seitliche Geländer (22), und der die ausgerichteten Objekte (16) im Wesentlichen senkrecht zur Transportrichtung von der dem Pusher gegenüberliegenden Seite von der Transporteinrichtung (10) herunterschiebt.

6. Verfahren gemäß einem der Ansprüche 4 oder 5, wobei die Objekte (16) mindestens einen Umfangsbereich mit einem der Standfläche (18) entsprechenden achsensymmetrischen Querschnitt aufweisen, und wobei das schienenförmige Geländer (22) mindestens eine Ausrichteschiene (24) umfasst, die auf Höhe des achsensymmetrischen Umfangsbereichs der Objekte (16) angebracht ist.

7. Verfahren gemäß Anspruch 6, wobei der achsensymmetrische Umfangsbereich der Objekte (16) in Höhe des Bodenbereichs der Objekte (16) angeordnet ist, und die Ausrichteschiene (24) ausschließlich auf der Höhe des achsensymmetrischen Umfangsbereichs der Objekte (16) angeordnet ist.

8. Verfahren gemäß Anspruch 6 oder 7, wobei die Objekte (16) im Wesentlichen ausschließlich an die Ausrichteschiene (24) des Geländers (22) gedrückt werden.

9. Verfahren gemäß einem der Ansprüche 4 bis 8, wobei die Objekte (16) einen rotationssymmetrischen Umfangsbereich aufweisen, und wobei das schienenförmige Geländer (22) mindestens eine Leitschiene (26) umfasst, die auf Höhe des rotationssymmetrischen Umfangsbereichs der Objekte (16) angebracht ist.

10. Verfahren gemäß einem der Ansprüche 4 bis 9, wobei die auszuleitenden Objekte (16) eine Standfläche in Form eines regulären Fünfecks besitzen, und wobei die Standfläche bevorzugt aus fünf einzelnen Auflageflächen besteht.

11. Verfahren gemäß einem der Ansprüche 4 bis 10, wobei es sich bei den auszuleitenden Objekten (16) um Plastikflaschen, bevorzugt um Einweg-PET-Flaschen, handelt, die einen zylindersymmetrischen Körper und eine Standfläche und einen sich daran anschließenden Bodenbereich aufweisen, wobei die Standfläche und der Bodenbereich jeweils die Form eines regulären Fünfecks besitzen.

## Claims

1. A device for discharging objects (16) each having an axially symmetrical base surface (18), wherein the axially symmetrical base surface has the shape of a regular polygon with a three-, five-, or seven-fold axial symmetry, comprising:
an aligning unit (12) configured to align the objects in a predetermined orientation,
a discharge unit (14),
a transport unit (10), on which the objects (16) are conveyed in a single row and in a mutually spaced manner from the aligning unit (12) to the discharge unit (14), and
at least one railing (22) arranged on one side of the transport unit (10) at least in the region of the aligning unit (12),
wherein the aligning unit (12) is configured such that the objects (16) are pressed against the railing (22) and are thereby aligned such that an axis of symmetry of the base surface (18) in the transport plane extends perpendicularly to said railing (22) and wherein the objects (16) are then transported to the discharge unit (14) in this orientation,
and wherein the discharge unit (14) is oriented such that one of the corners of the base surface of the objects (16) points in the direction in which the objects are discharged,
wherein the objects (16) are pressed against the railing (22) by tilting the transport unit (10) in the region of the aligning unit (12).

2. The device according to claim 1, wherein the railing (22) is configured in a rail-shaped form.

3. The device according to any of the previous claims, wherein the rail-shaped railing (22) comprises at least one aligning rail (24) and at least one guide rail (26), and
wherein the aligning rail (24) and the guide rail (26) are parallel to each other, but disposed laterally offset relative to the transport direction (10), such that the objects (16) are guided along the guide rail (26) only when the objects (16) have adopted the desired orientation.

4. A method for discharging objects with an axially symmetrical base surface, wherein the axially symmetrical base surface has the shape of a regular polygon with a three-, five-, or seven-fold axial symmetry, comprising the following steps:
conveying the objects (16) on a transport unit (10),
aligning the objects (16) conveyed on the transport unit (10) using an aligning unit (12) in a predetermined orientation, and
discharging the objects (16) aligned in the predetermined orientation using a discharging unit (14),
wherein the objects (16) are conveyed on the transport unit (10) in a single row and in a mutually spaced manner from the aligning unit (12) to the discharge unit (14), and wherein the transport unit (10) is provided with a lateral railing (22) at least in the region of the aligning unit (12),
wherein the aligning unit (12) is configured such that the objects (16) are pressed against the lateral railing (22) and are oriented such that an axis of symmetry of the axially symmetrical base surface (18) of the objects (16) extends on the transport plane perpendicularly to the lateral railing (22),
and wherein the discharge unit (14) is oriented such that one of the corners of the base surface of the objects (16) points in the direction in which the objects are discharged,
wherein the objects (16) are pressed against the railing (22) by tilting the transport unit (10) in the region of the aligning unit (12).

5. The method according to claim 4, wherein the discharge unit (14) is preferably a pusher, disposed on the same side as the lateral railing (22), and which pushes the aligned objects (16) substantially perpendicularly to the transport direction off the side opposite of the pusher of the transport unit (10).

6. The method according to any of claims 4 or 5, wherein the objects (16) have at least one peripheral region with an axially symmetrical cross-section corresponding to the base surface (18), and wherein the rail-shaped railing (22) comprises at least one aligning rail (24), fixed at the height of the axially symmetrical peripheral region of the objects (16).

7. The method according to claim 6, wherein the axially symmetrical peripheral region of the objects (16) is disposed at the height of a bottom region of the objects (16), and the aligning rail (24) is exclusively disposed at the height of the axially symmetrical peripheral region of the objects (16).

8. The method according to claim 6 or 7, wherein the objects (16) are essentially pressed against the aligning rail (24) of the railing (22), only.

9. The method according to any of claims 4 to 8, wherein the objects (16) have a rotationally symmetrical peripheral region, and wherein the rail-shaped railing (22) comprises at least one guide rail (26), fixed at the height of the rotationally symmetrical peripheral region of the objects (16).

10. The method according to any of claims 4 to 9, wherein the objects (16) to be discharged have a base surface in the shape of a regular pentagon, and wherein the base surface preferably consists of five individual support areas.

11. The method according to any of claims 4 to 10, wherein the objects (16) to be discharged are plastic bottles, preferably disposable PET bottles, having a cylindrically symmetrical body and a base surface and a contiguous bottom region, wherein the base surface and the bottom region respectively possess the shape of a regular pentagon.

## Revendications

1. Dispositif pour évacuer des objets (16) ayant chacun une surface d'appui à symétrie axiale (18), la surface d'appui à symétrie axiale ayant la forme d'un polygone régulier à trois, cinq ou sept axes de symétrie, comprenant
un moyen d'alignement (12) qui est conçu pour aligner les objets dans une orientation prédéterminée,
un moyen d'évacuation (14),
un moyen de transport (10) sur lequel les objets (16) sont transportés en une seule rangée et à distance les uns des autres du moyen d'alignement (12) vers le moyen d'évacuation (14), et
au moins une rambarde (22) qui est prévue sur un côté du moyen de transport (10) au moins au niveau du moyen d'alignement (12),
dans lequel le moyen d'alignement (12) est réalisé de telle sorte que les objets (16) sont pressés contre la rambarde (22) et s'alignent alors de telle sorte qu'un axe de symétrie de la surface d'appui (18) s'étende dans le plan de transport perpendiculairement à cette rambarde (22), et les objets (16) sont ensuite amenés dans cette orientation au moyen d'évacuation (14),
et dans lequel le moyen d'évacuation (14) est orienté de telle sorte que l'un des coins de la surface d'appui des objets (16) soit dirigé dans la direction dans laquelle les objets sont évacués,
dans lequel les objets (16) sont pressés contre la rambarde (22) par basculement du moyen de transport (10) au niveau du moyen d'alignement (12).

2. Dispositif selon la revendication 1, dans lequel la rambarde (22) est réalisée en forme de rail.

3. Dispositif selon l'une des revendications précédentes, dans lequel la rambarde en forme de rail (22) comprend au moins un rail d'alignement (24) et au moins un rail de guidage (26), et
dans lequel le rail d'alignement (24) et le rail de guidage (26) sont disposés parallèlement l'un à l'autre, mais décalés latéralement par rapport à la direction de transport (10), de sorte que les objets (16) ne sont guidés contre le rail de guidage (26) que lorsque les objets (16) ont pris l'alignement souhaité.

4. Procédé pour évacuer des objets ayant une surface d'appui à symétrie axiale, la surface d'appui à symétrie axiale ayant la forme d'un polygone régulier à trois, cinq ou sept axes de symétrie, comprenant les étapes consistant à :
transporter les objets (16) sur un moyen de transport (10),
aligner les objets (16) transportés sur le moyen de transport (10) dans une orientation prédéterminée à l'aide d'un moyen d'alignement (12), et
évacuer les objets (16) alignés dans l'orientation prédéterminée à l'aide d'un moyen d'évacuation (14),
dans lequel les objets (16) sont transportés sur le moyen de transport (10) en une seule rangée et à distance les uns des autres du moyen d'alignement (12) vers le moyen d'évacuation (14), et dans lequel le moyen de transport (10) est muni, au moins au niveau du moyen d'alignement (12), d'une rambarde latérale (22),
dans lequel le moyen d'alignement (12) est réalisé de telle sorte que les objets (16) sont pressés contre la rambarde latérale (22) et s'orientent alors de telle sorte qu'un axe de symétrie de la surface d'appui à symétrie axiale (18) des objets (16) s'étende dans le plan de transport perpendiculairement à cette rambarde latérale (22),
et dans lequel le moyen d'évacuation (14) est orienté de telle sorte que l'un des coins de la surface d'appui des objets (16) soit dirigé dans la direction dans laquelle les objets sont évacués,
dans lequel les objets (16) sont pressés contre la rambarde (22) par basculement du moyen de transport (10) au niveau du moyen d'alignement (12).

5. Procédé selon la revendication 4, dans lequel le moyen d'évacuation (14) est de préférence un poussoir qui est disposé du même côté que la rambarde latérale (22) et qui pousse les objets alignés (16) essentiellement perpendiculairement à la direction de transport depuis le côté opposé au poussoir hors du moyen de transport (10).

6. Procédé selon l'une des revendications 4 ou 5, dans lequel les objets (16) présentent au moins une zone périphérique avec une section transversale ayant une symétrie axiale correspondant à la surface d'appui (18), et dans lequel la rambarde en forme de rail (22) comprend au moins un rail d'alignement (24) qui est monté à hauteur de la zone périphérique à symétrie axiale des objets (16).

7. Procédé selon la revendication 6, dans lequel la zone périphérique à symétrie axiale des objets (16) est disposée à hauteur de la zone de fond des objets (16) et le rail d'alignement (24) est disposé exclusivement à hauteur de la zone périphérique à symétrie axiale des objets (16).

8. Procédé selon la revendication 6 ou 7, dans lequel les objets (16) sont pressés essentiellement exclusivement contre le rail d'alignement (24) de la rambarde (22).

9. Procédé selon l'une des revendications 4 à 8, dans lequel les objets (16) présentent une zone périphérique à symétrie de révolution, et dans lequel la rambarde en forme de rail (22) comprend au moins un rail de guidage (26) qui est monté à hauteur de la zone périphérique à symétrie de révolution des objets (16).

10. Procédé selon l'une des revendications 4 à 9, dans lequel les objets à évacuer (16) possèdent une surface d'appui en forme de pentagone régulier, et dans lequel la surface d'appui est de préférence constituée de cinq surfaces d'appui individuelles.

11. Procédé selon l'une des revendications 4 à 10, dans lequel les objets à évacuer (16) sont des bouteilles en plastique, de préférence des bouteilles en PET à usage unique, qui présentent un corps à symétrie cylindrique et une surface d'appui à laquelle se raccorde une zone de fond, dans lequel la surface d'appui et la zone de fond possèdent chacune la forme d'un pentagone régulier.
